# EUROPÄISCHE PATENTSCHRIFT

(11) **EP 2 264 656 B1**
(45) Veröffentlichungstag und Bekanntmachung des Hinweises auf die Patenterteilung: **29.06.2011**
(21) Anmeldenummer: 10005938.5
(22) Anmeldetag: 09.06.2010
(51) Int. Cl.: G06Q 10/00, G05B 15/02

(54) **Gebäudemanagementsystem**
Building management system
Système de gestion de bâtiments

(30) Priorität: 19.06.2009 DE 102009029933
(43) Veröffentlichungstag der Anmeldung: 22.12.2010
(73) Patentinhaber: Honeywell Technologies Sarl, 1180 Rolle (CH)
(72) Erfinder: Ebert, Volker Frank, 70771 Leinfelden (DE)
(74) Vertreter: Sturm, Christoph

(56) Entgegenhaltungen:
- US-A1- 2004 144 849
- US-A1- 2008 282 817
- US-A1- 2009 057 428

## Beschreibung

Die Erfindung betrifft ein Gebäudemanagementsystem nach dem Oberbegriff des Anspruchs 1.

Ein Gebäudemanagementsystem dient der Steuerung und/oder Regelung und/oder Überwachung verschiedener für den Betrieb eines Gebäudes erforderlicher Funktionalitäten, so zum Beispiel der Regelung einer Heizungsfunktionalität des Gebäudes. Ein Gebäudemanagementsystem verfügt hierzu über eine Vielzahl von Sensoren und Aktuatoren, wobei mithilfe der Sensoren Messwerte von zum Beispiel Regelgrößen erfasst und mithilfe der Aktuatoren Stellsignale zum Beispiel zur Beeinflussung der Regelgrößen generiert werden. Die Sensoren und Aktuatoren eines Gebäudemanagementsystems sind über eine Vielzahl von Stockwerken und eine Vielzahl von Räumen eines Gebäudes verteilt und an sogenannte Ein/Ausgabe-Einheiten angeschlossen, wobei an jede Ein/Ausgabe-Einheit mehrere Sensoren und/oder Aktuatoren angeschlossen sind. Die Ein/Ausgabe-Einheiten des Gebäudemanagementsystems tauschen einerseits mit den an dieselben angeschlossenen Sensoren und/oder Aktuatoren und andererseits mit einem zentralen Leitrechner Daten aus.

Bei der Installation eines Gebäudemanagementsystems müssen die Sensoren und Aktuatoren des Gebäudemanagementsystems mit den Ein/Ausgabe-Einheiten desselben kontaktiert und damit verdrahtet werden. Bei dem Kontaktieren bzw. Anschließen der Sensoren und Aktuatoren an die Ein/Ausgabe-Einheiten des Gebäudemanagementsystems können sich Fehler einstellen. So kann zum Beispiel ein Monteur einen Sensor sowie Aktuator an einen falschen Eingangsanschluss oder Ausgangsanschluss einer Ein/Ausgabe-Einheit anschließen. In diesem Fall weicht dann die tatsächliche Ist-Verdrahtung des Gebäudemanagementsystems von einer gewünschten Soll-Verdrahtung desselben ab, wodurch sich dann Fehlfunktionen bei der Regelung und/oder Steuerung und/oder Überwachung von Gebäudefunktionalitäten einstellen können.

Es ist daher von Wichtigkeit, die Ist-Verdrahtung eines Gebäudemanagementsystems mit einer Soll-Verdrahtung zu vergleichen. Hierzu gibt es bislang keine Hilfsmittel, sodass nach einem vollständigen Anschluss aller Sensoren und Aktuatoren an die Ein/Ausgabe-Einheiten eines Gebäudemanagementsystems die tatsächliche Ist-Verdrahtung mit der gewünschten Soll-Verdrahtung dadurch überprüft werden muss, dass zum Beispiel ein erster Installateur an einem definierten Sensor ein Messsignal auslöst, wobei dann ein zweiter Installateur am zentralen Leitrechner überprüft, ob das an dem definierten Sensor vom ersten Installateur ausgelöste Messsignal aufgrund der tatsächlichen Ist-Verdrahtung des Gebäudemanagementsystems mit dem Sensor der Soll-Verdrahtung übereinstimmt. Wird hierbei eine Abweichung festgestellt, so muss der Anschluss des entsprechenden Sensors an der Ein/Ausgabe-Einheit geändert werden, sodass die Ist-Verdrahtung mit der Soll-Verdrahtung übereinstimmt. Die obige Vorgehensweise ist aufwendig und daher teuer.

Ein Gebäudemanagementsystem mit den Merkmalen des Oberbegriffs des Anspruchs 1 ist aus US 2008282817 A1 bekannt.

Der Erfindung liegt die Aufgabe zu Grunde, ein neuartiges Gebäudemanagementsystem zu schaffen. Diese Aufgabe wird durch ein Gebäudemanagementsystem mit den Merkmalen des Anspruchs 1 gelöst. Erfingdungsgemäß generiert die Auswerteinheit aus den ausgelesenen Daten einen Ist-Verdrahtungsplan generiert und vergleicht diesen Ist-Verdrahtungsplan mit einem Soll-Verdrahtungsplan.

Mit der hier vorliegenden Erfindung wird erstmals ein Gebäudemanagementsystem vorgeschlagen, bei welchem die Ist-Verdrahtung mit der gewünschten Soll-Verdrahtung einfach, kostengünstig und zeitsparend verglichen werden kann. Hierzu ist jedem Sensor und/oder Aktuator ein Speicher zugeordnet, in dem anwendungsspezifische und/oder positionsspezifische Daten des jeweiligen Sensors bzw. Aktuators gespeichert sind. Mit jeder Ein/Ausgabe-Einheit ist eine Auswerteeinheit koppelbar, welche die anwendungsspezifischen und/oder positionsspezifischen Daten derjenigen Sensoren und/oder Aktuatoren ausliest, die an die jeweilige Ein/Ausgabe-Einheit angeschlossen sind. Die Auswerteeinheit generiert dann aus den aus den Sensoren und/oder Aktuatoren ausgelesenen Daten automatisch einen Ist-Verdrahtungsplan des Gebäudemanagementsystems und vergleicht diesen automatisch mit einem Soll-Verdrahtungsplan desselben. Hierdurch ist es möglich, die korrekte Installation eines Gebäudemanagementsystems mit geringerem Personalaufwand und damit Kostenaufwand automatisch zu überprüfen.

Nach einer vorteilhaften Weiterbildung der Erfindung sind im Bereich jeder Ein/Ausgabe-Einheit die Sensoren und/oder Aktuatoren an einen Anschlusssockel der Ein/Ausgabe-Einheit angeschlossen und über den Anschlusssockel mit einem Ein/Ausgabe-Modul der Ein/Ausgabe-Einheit kontaktiert. Die Auswerteeinheit ist über ein Interfacemodul an die Ein/Ausgabe-Einheit derart koppelbar, dass das Interfacemodul zur Kopplung der Auswerteeinheit an die Ein/Ausgabe-Einheit zwischen den Anschlusssockel und das Ein/AusgabeModul der jeweiligen Ein/Ausgabe-Einheit geschaltet ist. Das Interfacemodul ist in Form eines Zwischensteckers ausgebildet, der zur Kopplung der Auswerteeinheit an eine Ein/Ausgabe-Einheit zwischen den Anschlusssockel und das Ein/Ausgabe-Modul der jeweiligen Ein/Ausgabe-Einheit schaltbar ist. Dies hat den Vorteil, dass im Bereich der Ein/Ausgabe-Einheit kein zusätzlicher Hardwareaufwand erforderlich ist. Das Interfacemodul ist nur einmal erforderlich und kann im Bereich jeder Ein/Ausgabe-Einheit zwischen den Anschlusssockel und das Ein/Ausgabe-Modul der jeweiligen Ein/Ausgabe-Einheit gesteckt werden.

Bevorzugte Weiterbildungen der Erfindung ergeben sich aus den Unteransprüchen und der nachfolgenden Beschreibung. Nachfolgend werden Ausführungsbeispiele der Erfindung, ohne hierauf beschränkt zu sein, anhand der Zeichnung näher erläutert. In der Zeichnung zeigt:

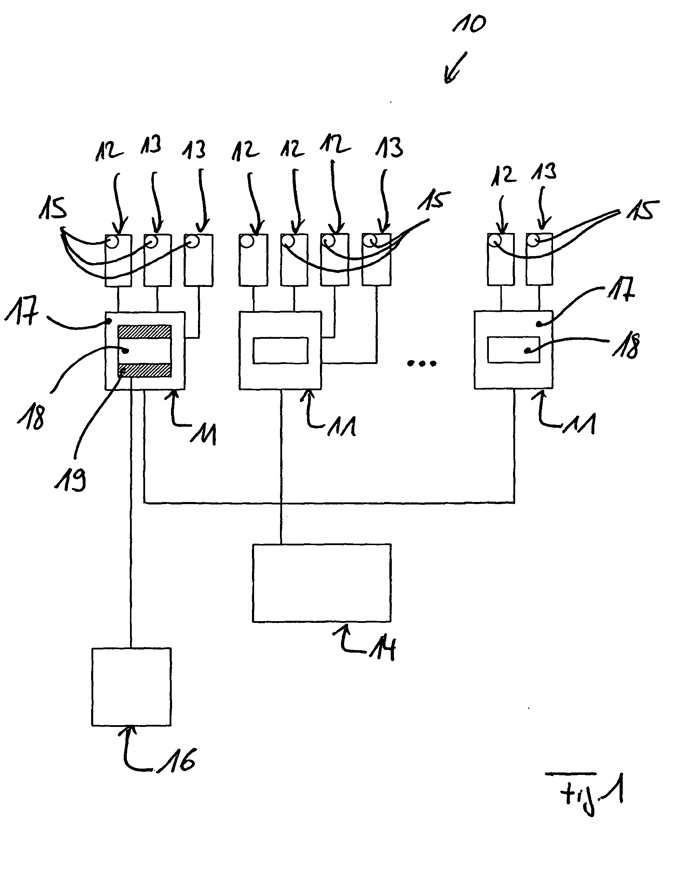

- Fig. 1:: ein Blockschaltbild eines erfindungsgemäßen Gebäudemanage- mentsystems.

Fig. 1 zeigt ein stark schematisiertes Blockschaltbild eines Gebäudemanagementsystems 10, welches eine Vielzahl von Ein/Ausgabe-Einheiten 11 aufweist, die über die unterschiedlichen Stockwerke und Räume eines Gebäudes verteilt sind. Das Gebäudemanagementsystem 10 verfügt weiterhin über eine Vielzahl von Sensoren 12 und Aktuatoren 13, wobei die Sensoren 12 und Aktuatoren 13 an die Ein/Ausgabe-Einheiten 11 des Gebäudemanagementsystems 10 angeschlossen sind.

Die Ein/Ausgabe-Einheiten 11 sind an einen zentralen Leitrechner 14 des Gebäudemanagementsystems 10 anschlossen, wobei die Ein/Ausgabe-Einheiten 11 einerseits mit dem zentralen Leitrechner 14 und andererseits mit den Sensoren 12 und Aktuatoren 13 Daten austauschen.

Das in Fig. 1 gezeigte Gebäudemanagementsystem 10 arbeitet nur dann ordnungsgemäß, wenn eine bei der Installation des Gebäudemanagementsystems 10 ausgebildete Ist-Verdrahtung desselben mit einer vorgegebenen Soll-Verdrahtung übereinstimmt. Nur dann können mithilfe der Sensoren 12 erfasste Messwerte im zentralen Leitrechner 14 zum Beispiel zur Bereitstellung von Stellsignalen für die Aktuatoren 13 korrekt bearbeitet werden.

Die hier vorliegende Erfindung schlägt nun ein Gebäudemanagementsystem 10 vor, bei dem die Ist-Verdrahtung mit einer Soll-Verdrahtung einfach und automatisch verglichen werden kann.

Im Sinne der hier vorliegenden Erfindung ist jedem Sensor 12 und jedem Aktuator 13, der an eine Ein/Ausgabe-Einheit 11 angeschlossen ist, ein Speicher 15 zugeordnet. In jeden Speicher 15 eines jeden Sensors 12 und Aktuators 13 sind anwendungsspezifische Daten und/oder positionsspezifische Daten des jeweiligen Sensors 12 bzw. Aktuators 13 gespeichert. Bei den positionsspezifischen Daten kann es sich zum Beispiel um eine sogenannte Gebäudeadresse handeln.

Das erfindungsgemäße Gebäudemanagementsystem 10 verfügt über eine Auswerteeinheit 16, die an die Ein/Ausgabe-Einheiten 11 ankoppelbar ist. Über die Auswerteeinheit 16 können die anwendungsspezifischen Daten und/oder positionsspezifischen Daten derjenigen Sensoren 12 und/oder Aktuatoren 13 ausgelesen werden, die an die Ein/Ausgabe-Einheit 11 angeschlossen sind, mit der die Auswerteeinheit 16 gekoppelt ist.

Die Auswerteeinheit 16 generiert aus den ausgelesenen Daten der Sensoren 12 und Aktuatoren 13 automatisch einen Ist-Verdrahtungsplan des Gebäudemanagementsystems 10 und vergleicht diesen automatisch mit einem Soll-Verdrahtungsplan.

Dann, wenn die Auswerteeinheit 16 eine Abweichung zwischen dem Ist-Verdrahtungsplan und dem Soll-Verdrahtungsplan des Gebäudemanagementsystems 10 ermittelt, generiert dieselbe automatisch eine Fehlermeldung, auf Grundlage derer für einen Monteur bzw. Installateur die Kontaktierung der Sensoren 12 und/oder Aktuatoren 13 mit der jeweiligen Ein/Ausgabe-Einheit 11 änderbar ist.

Es ist auch möglich, dass dann, wenn die Auswerteeinheit 16 eine Abweichung zwischen dem Ist-Verdrahtungsplan und dem Soll-Verdrahtungsplan ermittelt, dass dieselbe automatisch den Soll-Verdrahtungsplan ändert, um denselben an den Ist-Verdrahtungsplan anzupassen.

Dies ist zum Beispiel dann möglich, wenn an eine Ein/Ausgabe-Einheit 11 zwei funktionsgleiche Sensoren angeschlossen sind, dieselben jedoch irrtümlich an falsche Eingänge der Ein/Ausgabe-Einheit angeschlossen wurden. In diesem Fall kann dann virtuell die Zuordnung der Sensoren zu den Eingängen der Ein/Ausgabe-Einheit angepasst werden. Wird jedoch ein Sensor irrtümlich an einen Ausgang und nicht an einen Eingang einer Ein/Ausgabe-Einheit 11 angeschlossen, so kann der Soll-Verdrahtungsplan nicht entsprechend werden, vielmehr wird dann eine Fehlermeldung generiert, auf Grundlage derer dann die Ist-Verdrahtung geändert wird.

Im Bereich jeder Ein/Ausgabe-Einheit 11 sind die Sensoren 12 sowie Aktuatoren 13 vorzugsweise an einen Anschlusssockel 17 angeschlossen und über den Anschlusssockel 17 mit einem Ein/Ausgabe-Modul 18 der jeweiligen Ein/Ausgabe-Einheit 11 kontaktiert.

Die Auswerteeinheit 16 ist dann über ein Interfacemodul 19 derart an die Ein/Ausgabe-Einheit 11 gekoppelt, dass das Interfacemodul 19 im Sinne eines Zwischensteckers zwischen den Anschlusssockel 17 und das Ein/AusgabeModul 18 der Ein/Ausgabe-Einheit 11 geschaltet ist. Auf diese Art und Weise können unter Ausnutzung der bestehenden Verdrahtung und der bestehenden Anschlüsse auf einfache Art und Weise ohne hardwaretechnische Änderung des Anschlusssockels 17 sowie des Ein/Ausgabe-Moduls 18 der Ein/AusgabeEinheit 11 und damit der gesamten Ein/Ausgabe-Einheit 11 aus den Sensoren 12 und Aktuatoren 13 die in den Speichern 15 derselben gespeicherten Daten ausgelesen werden.

Nach dem Auslesen der Daten wird das Interfacemodul 19 wieder von der jeweiligen Ein/Ausgabe-Einheit 11 entfernt und im Bereich einer anderen Ein/Ausgabe-Einheit 11 eingesetzt, um wiederum die Daten derjenigen Sensoren 12 und Aktuatoren 13 auszulesen, die an den Anschlusssockel 17 der jeweiligen Ein/Ausgabe-Einheit 11 angeschlossen sind.

Das Interfacemodul 19 ist nur einmal erforderlich und kann im Bereich jeder Ein/Ausgabe-Einheit 11 als Zwischenstecker eingesetzt werden. Hierdurch kann die Erfindung mit minimalen Kosten umgesetzt werden. An den Ein/Ausgabe-Einheiten 11, insbesondere an den Ein/Ausgabe-Modulen 18 der Ein/Ausgabe-Einheiten 11, ist keine hardwareseitige Änderung erforderlich.

Bei den Speichern 15 der Sensoren 12 und Aktuatoren 13 handelt es sich vorzugsweise um RFID-Chips, in die drahtlos die anwendungsspezifischen Daten und/oder positionsspezifischen Daten geschrieben werden können. Erste Daten können dabei bereits bei der Produktion der Sensoren 12 und Aktuatoren 13 in die Speicher 15 derselben geschrieben werden, so z. B. Daten über den Typ und die Serienummer des jeweiligen Sensors 12 oder des jeweiligen Aktuators 13. Zweite Daten werden hingegen erst bei der Installation des Gebäudemanagementsystems 10 in die Speicher 15 der Sensoren 12 und Aktuatoren 13 geschrieben, so z. B. Daten über eine Gebäudeadresse derselben. Das Auslesen dieser Daten aus den Speichern 15 der Sensoren 12 und Aktuatoren 13 über die Auswerteinheit 16 bzw. das Interfacemodul 19 erfolgt hingegen nicht drahtlos, sondern vielmehr drahtgebunden über die bestehende Verdrahtung und die bestehenden Anschlüsse der jeweiligen Ein/Ausgabe-Einheit 11, nämlich des Anschlusssockels 17 derselben, da ja die Verdrahtung bzw. Kontaktierung der Sensoren 12 und Aktuatoren 13 mit den Eingängen und Ausgängen der Ein/Ausgabe-Einheit 11 zu überprüfen ist.

### Bezugszeichenliste

- 10: Gebäudemanagementsystem
- 11: Ein/Ausgabe-Einheit
- 12: Sensor
- 13: Aktuator
- 14: Leitrechner
- 15: Speicher
- 16: Auswerteeinheit
- 17: Anschlusssockel
- 18: Ein/Ausgabe-Modul
- 19: Interfacemodul

## Patentansprüche

1. Gebäudemanagementsystem mit mehreren über ein Gebäude verteilten Sensoren, Aktuatoren und Ein/Ausgabe-Einheiten, wobei an jede Ein/Ausgabe-Einheit (11) mehrere Sensoren (12) und/oder Aktuatoren (13) angeschlossen sind, und wobei die Ein/Ausgabe-Einheiten (11) einerseits mit den an dieselben angeschlossenen Sensoren (12) und/oder Aktuatoren (13) und andererseits mit einem zentralen Leitrechner (14) Daten austauschen, jedem Sensor (12) und/oder Aktuator (13) ein Speicher (15) zugeordnet ist, in dem anwendungsspezifische Daten und/oder positionsspezifische Daten des jeweiligen Sensors (12) und/oder Aktuators (13) gespeichert sind, wobei mit jeder Ein/Ausgabe-Einheit (11) eine Auswerteinheit (16) koppelbar ist, über welche die anwendungsspezifischen Daten und/oder positionsspezifischen Daten derjenigen Sensoren (12) und/oder Aktuatoren (13) auslesbar sind, die an die jeweilige Ein/Ausgabe-Einheit (11) angeschlossen sind, **dadurch gekennzeichnet, dass** die Auswerteinheit (16) aus den ausgelesenen Daten einen Ist-Verdrahtungsplan generiert und diesen Ist-Verdrahtungsplan mit einem Soll-Verdrahtungsplan vergleicht.

2. Gebäudemanagementsystem nach Anspruch 1, **dadurch gekennzeichnet, dass** dann, wenn die Auswerteinheit (16) eine Abweichung zwischen dem Ist-Verdrahtungsplan und dem Soll-Verdrahtungsplan ermittelt, automatisch eine Fehlermeldung generiert, auf Grundlage derer für einen Monteur die Kontaktierung der Sensoren und/oder Aktuatoren mit der jeweiligen Ein/Ausgabe-Einheit (11) änderbar ist.

3. Gebäudemanagementsystem nach Anspruch 1 oder 2, **dadurch gekennzeichnet, dass** dann, wenn die Auswerteinheit (16) eine Abweichung zwischen dem Ist-Verdrahtungsplan und dem Soll-Verdrahtungsplan ermittelt, automatisch den Soll-Verdrahtungsplan ändert.

4. Gebäudemanagementsystem nach einem der Ansprüche 1 bis 3, **dadurch gekennzeichnet, dass** im Bereich jeder Ein/Ausgabe-Einheit (11) die Sensoren und/oder Aktuatoren an einen Anschlusssockel (17) angeschlossen und über den Anschlusssockel (17) mit einem Ein/AusgabeModul (18) der Ein/Ausgabe-Einheit (11) kontaktiert sind.

5. Gebäudemanagementsystem nach Anspruch 4, **dadurch gekennzeichnet, dass** die Auswerteeinheit (16) über ein Interfacemodul (19) an die Ein/Ausgabe-Einheit (11) derart koppelbar ist, dass das Interfacemodul (19) zur Kopplung der Auswerteeinheit (16) an die Ein/Ausgabe-Einheit (11) zwischen den Anschlusssockel (17) und das Ein/Ausgabe-Modul (18) der jeweiligen Ein/Ausgabe-Einheit (11) geschaltet ist.

6. Gebäudemanagementsystem nach einem der Ansprüche 1 bis 5, **dadurch gekennzeichnet, dass** die Speicher (15) der Sensoren (12) und/oder Aktuatoren (13) als RFID-Chips ausgebildet sind.

7. Gebäudemanagementsystem nach Anspruch 6, **dadurch gekennzeichnet, dass** die Speicher (15) drahtlos beschreibbar und über die bestehende Verdrahtung und die bestehenden Anschlüsse der jeweiligen Ein/Ausgabe-Einheit (11) auslesbar sind.

## Claims

1. Building management system having a plurality of sensors, actuators and input/output units distributed over a building, a plurality of sensors (12) and/or actuators (13) being connected to each input/output unit (11), and the input/output units (11) interchanging data with the sensors (12) and/or actuators (13) connected to them, on the one hand, and with a central control computer (14), on the other hand, each sensor (12) and/or actuator (13) being associated with a memory (15) which stores application-specific data and/or position-specific data relating to the respective sensor (12) and/or actuator (13), an evaluation unit (16) being able to be coupled to each input/output unit (11), which evaluation unit can be used to read the application-specific data and/or position-specific data relating to those sensors (12) and/or actuators (13) which are connected to the respective input/output unit (11), **characterized in that** the evaluation unit (16) generates an actual wiring diagram from the data which have been read and compares this actual wiring diagram with a desired wiring diagram.

2. Building management system according to Claim 1, **characterized in that**, when the evaluation unit (16) determines a difference between the actual wiring diagram and the desired wiring diagram, it automatically generates an error message, on the basis of which a fitter can change the contact-connection of the sensors and/or actuators to the respective input/output unit (11).

3. Building management system according to Claim 1 or 2, **characterized in that**, when the evaluation unit (16) determines a difference between the actual wiring diagram and the desired wiring diagram, it automatically changes the desired wiring diagram.

4. Building management system according to one of Claims 1 to 3, **characterized in that** the sensors and/or actuators are connected to a connector base (17) in the region of each input/output unit (11) and are contact-connected to an input/output module (18) of the input/output unit (11) via the connector base (17).

5. Building management system according to Claim 4, **characterized in that** the evaluation unit (16) can be coupled to the input/output unit (11) via an interface module (19) in such a manner that the interface module (19) is connected between the connector base (17) and the input/output module (18) of the respective input/output unit (11) in order to couple the evaluation unit (16) to the input/output unit (11).

6. Building management system according to one of Claims 1 to 5, **characterized in that** the memories (15) of the sensors (12) and/or actuators (13) are in the form of RFID chips.

7. Building management system according to Claim 6, **characterized in that** the memories (15) can be written to in a wireless manner and can be read via the existing wiring and the existing connections of the respective input/output unit (11).

## Revendications

1. Système de gestion de bâtiments présentant plusieurs détecteurs, actionneurs et unités d'entrée-sortie répartis dans le bâtiment,
plusieurs détecteurs (12) et/ou actionneurs (13) étant raccordés à chaque unité (11) d'entrée-sortie,
les unités (11) d'entrée-sortie échangeant des données d'une part avec les détecteurs (12) et/ou actionneurs (13) qui y sont raccordés et d'autre part avec un calculateur central de conduite (14),
une mémoire (15) dans laquelle des données spécifiques à l'application et/ou des données spécifiques de position de chaque détecteur (12) et/ou de chaque actionneur (13) sont conservées en mémoire étant associée à chaque détecteur (12) et/ou à chaque actionneur (13),
une unité d'évaluation (16) par laquelle les données spécifiques à l'application et/ou des données spécifiques de position des détecteurs (12) et/ou des actionneurs (13) qui sont raccordés à l'unité (11) d'entrée-sortie concernée peuvent être lues pouvant être raccordée à chaque unité (11) d'entrée-sortie, **caractérisé en ce que**
l'unité d'évaluation (16) génère un plan de câblage effectif à partir des données lues et compare ce plan de câblage effectif à un plan de câblage de consigne.

2. Système de gestion de bâtiments selon la revendication 1, **caractérisé en ce que** lorsque l'unité d'évaluation (16) détermine qu'il existe un écart entre le plan de câblage effectif et le plan de câblage de consigne, elle génère automatiquement un message d'erreur sur base duquel un monteur peut modifier la mise en contact des détecteurs et/ou des actionneurs avec l'unité (11) d'entrée-sortie concernée.

3. Système de gestion de bâtiments selon les revendications 1 ou 2, **caractérisé en ce que** lorsque l'unité d'évaluation (16) détermine qu'il existe un écart entre le plan de câblage effectif et le plan de câblage de consigne, elle modifie automatiquement le plan de câblage de consigne.

4. Système de gestion de bâtiments selon l'une des revendications 1 à 3, **caractérisé en ce que** les détecteurs et/ou les actionneurs sont raccordés à un socle de raccordement (17) au niveau de chaque unité (11) d'entrée-sortie et sont mis en contact avec un module (18) d'entrée-sortie de l'unité (11) d'entrée-sortie par l'intermédiaire du socle de raccordement (17).

5. Système de gestion de bâtiments selon la revendication 4, **caractérisé en ce que** l'unité d'évaluation (16) peut être raccordée à l'unité (11) d'entrée-sortie par l'intermédiaire d'un module d'interface (19) en raccordant le module d'interface (19) destiné à raccorder l'unité d'évaluation (16) à l'unité (11) d'entrée-sortie entre le socle de raccordement (17) et le module (18) d'entrée-sortie de chaque unité (11) d'entrée-sortie.

6. Système de gestion de bâtiments selon l'une des revendications 1 à 5, **caractérisé en ce que** les mémoires (15) des détecteurs (12) et/ou des actionneurs (13) sont configurées comme puces RFID.

7. Système de gestion de bâtiments selon la revendication 6, **caractérisé en ce qu'**il est possible d'écrire sans fil sur les mémoires (15) et de les lire par l'intermédiaire du câblage existant et des raccordements existants de chaque unité (11) d'entrée-sortie.
